# EUROPÄISCHE PATENTSCHRIFT

(11) **EP 2 833 757 B1**
(45) Veröffentlichungstag und Bekanntmachung des Hinweises auf die Patenterteilung: **05.06.2019**
(21) Anmeldenummer: 13716157.6
(22) Anmeldetag: 05.03.2013
(51) Int. Cl.: A47B 88/90, F16B 12/26

(54) **ANORDNUNG ZUM VERBINDEN EINER SCHUBLADENSEITENWAND MIT EINER WEITEREN SCHUBLADENWAND**
ARRANGEMENT FOR CONNECTING A DRAWER SIDE WALL TO ANOTHER DRAWER WALL
DISPOSITIF SERVANT À RELIER UNE PAROI LATÉRALE DE TIROIR À UNE AUTRE PAROI DE TIROIR

(30) Priorität: 05.04.2012 AT 4072012
(43) Veröffentlichungstag der Anmeldung: 11.02.2015
(60) Teilanmeldung: 19167591.7
(73) Patentinhaber: Van Hoecke NV, 9100 Sint-Niklaas (BE)
(72) Erfinder: BALIKO, Karl, 6812 Meiningen (AT)
(74) Vertreter: Torggler & Hofinger Patentanwälte
(86) Internationale Anmeldenummer: PCT/AT2013/000040
(87) Internationale Veröffentlichungsnummer: WO 2013/149272

(56) Entgegenhaltungen:
- EP-A2- 0 722 680
- WO-A1-85/01996
- DE-A1-102007 049 940
- DE-U1-202009 014 811
- US-A- 4 752 150

## Beschreibung

Die Erfindung betrifft eine Schublade mit wenigstens einer zumindest teilweise aus einem nichtmetallischen Werkstoff, insbesondere aus Holz, gefertigten Schubladenseitenwand, wenigstens einer weiteren Schubladenwand und wenigstens einer Anordnung zum Verbinden der Schubladenseitenwand mit der weiteren Schubladenwand, wobei die Anordnung eine in der Schubladenseitenwand angeordnete Verbindungsvorrichtung zur lösbaren Verbindung mit einer an der weiteren Schubladenwand vormontierten Haltevorrichtung umfasst.

Derartige Schubladen sind zum Beispiel aus der DE 10 2007 049 940 A1 oder der DE 20 2009 014 811 U1 bekannt. Die genannten Anordnungen werden insbesondere zur Montage einer Frontblende oder einer Rückwand an Schubladenseitenwänden verwendet.

Nachteilig ist, dass die beim Stand der Technik zum Einsatz kommenden Anordnungen oftmals eine komplexe Bauweise und dadurch in weiterer Folge auch eine im Querschnitt relativ große Bauhöhe aufweisen. Das betrifft vor allem die in der Schubladenseitenwand angeordnete Verbindungsvorrichtung, was zur Konsequenz hat, dass die Schubladenseitenwand mindestens genauso dick wie die Verbindungsvorrichtung sein muss.

Allerdings werden zurzeit zunehmend Möbel, beispielsweise im Küchenbereich nachgefragt, die sich durch ein elegantes und raumsparendes Design auszeichnen, wozu bei einer Schublade unter anderem auch dünne Schubladenseitenwände gehören. Bei der Umsetzung dieses Kundenwunsches haben sich die bisher bekannten Anordnungen als hinderlich erwiesen.

Die Aufgabe der vorliegenden Erfindung besteht darin, die vorbeschriebenen Nachteile zu vermeiden und eine gegenüber dem Stand der Technik verbesserte Schublade der eingangs erwähnten Gattung anzugeben, wobei sich die bei der Schublade zum Einsatz kommende Anordnung insbesondere durch eine einfache und raumsparende Bauweise auszeichnet.

Diese Aufgabe wird erfindungsgemäß durch die Merkmale des unabhängigen Anspruchs 1 gelöst.

Eine Grundidee der Erfindung besteht darin, dass die Verbindungsvorrichtung wenigstens einen, vorzugsweise ausschließlich, vom nichtmetallischen Werkstoff der Schubladenseitenwand beweglich geführten aus einem ebenen Metallblech bestehenden Riegel aufweist, der in Montagelage die Haltevorrichtung hält, wobei der wenigstens eine Riegel im nichtmetalischen Werkstoff der Schubladenseitenwand linear verschiebbar gelagert ist. Hiermit sind mehrere Vorteile verbunden: Erstens kann die Führung für den wenigstens einen Riegel im nichtmetallischen Werkstoff der Schubladenseitenwand, zum Beispiel durch Ausfräsen, vergleichsweise einfach und kostengünstig ausgebildet werden. Zweitens kann der wenigstens eine Riegel auch sehr flach ausgebildet werden, wodurch sehr dünne Schubladenseitenwände realisierbar sind. Besteht der wenigstens eine Riegel beispielsweise aus einem ebenen Metallblech mit einer Dicke zwischen 1mm und 5mm, so muss die Schubladenseitenwand, in welcher der wenigstens eine Riegel angeordnet ist, nur unwesentlich dicker ausgebildet sein. Wenn es sich um einen derart dünnen Riegel handelt, ist es drittens möglich, den wenigstens einen Riegel vollständig im Inneren der Schubladenseitenwand anzuordnen und dennoch eine, im Vergleich zum Stand der Technik, relativ dünne Schubladenseitenwand zu verwenden. Die Anordnung im Inneren der Schubladenseitenwand ist aus ästhetischen Gründen vorteilhaft, da die Verbindungsvorrichtung auf diese Weise nicht nach außen hin sichtbar ist. Das bedeutet aber nicht, dass damit auch eine Einschränkung hinsichtlich der Lösbarkeit der Haltevorrichtung verbunden sein muss: So kann der wenigstens eine Riegel, vorzugsweise an seiner Unterseite, wenigstens einen von der Unterseite des Schubladenseitenwand her zugängigen Betätigungsbereich aufweisen, über den er zum Lösen der Haltevorrichtung bewegbar ist.

Bezüglich des nichtmetallischen Werkstoffs der Schubladenseitenwand sei angemerkt, dass es sich hierbei vorzugsweise um Holz handelt, wobei unter dem Begriff "Holz" im Sinne der Erfindung nicht nur Vollholz zu verstehen ist. Es können auch andere Holzmaterialien und -werkstoffe, wie z.B. Holzspanwerkstoffe oder Holzfaserwerkstoffe, verwendet werden. Weitere nichtmetallische Werkstoffe, die sich im Zusammenhang mit der Erfindung anbieten, sind Werkstoffe, die vergleichsweise leicht durch Spanbearbeitung bearbeitet werden können. Hierzu zählen auch Kunststoffmaterialien, wie z.B. der für den Medizinbereich verwendete Werkstoff Corian. Und schließlich sei auch die Kombination verschiedener Werkstoffe vom Erfindungsgedanken mit umfasst. So kann es beispielsweise vorgesehen sein, dass die Schubladenseitenwand aus zwei Platten aufgebaut ist, wobei die beiden Platten aus unterschiedlichen Materialien bestehen, wie z.B. einer Holzplatte mit einer HPL-Beschichtung.

Durch die einfache Bauweise der Anordnung der erfindungsgemäßen Schublade ist es sogar möglich, die Anordnung modular zu erweitern, um unterschiedlichen Bauhöhen einer Schublade gerecht zu werden. Dies ist beim Stand der Technik nicht möglich. So kann es bei der vorliegenden Erfindung zum Beispiel vorgesehen sein, dass die Anordnung zwei vom nichtmetallischen Werkstoff der Schubladenseitenwand beweglich geführte Riegel aufweist, die in Montagelage die Haltevorrichtung halten. Diese Ausführungsform der Erfindung kann dahingehend weitergebildet werden, dass
- die zwei Riegel in Montagelage übereinander angeordnet sind,
- die zwei Riegel unabhängig voneinander verschiebbar gelagert sind, und/oder
- die zwei Riegel zum Lösen der Haltevorrichtung gemeinsam bewegbar sind.
Sind die beiden zuletzt genannten Merkmale realisiert, so bietet das den Vorteil, dass einerseits bei der Verarbeitung auftretende Montagetoleranzen durch die Unabhängigkeit der zwei Riegel ausgeglichen werden können und andererseits aber die zwei Riegel zum Lösen der Haltevorrichtung gemeinsam bewegbar sind. Zu den angesprochenen Montagetoleranzen zählen z.B. bei der Verwendung von Holz als nichtmetallischem Werkstoff auch Änderungen der Höhe einer Schubladenseitenwand aufgrund von Feuchtigkeitsänderungen, die bei typischerweise verwendeten Bauhöhen einer Schublade bis zu 0,5mm betragen können.

Weitere vorteilhafte Ausführungsformen der Erfindung sind in den abhängigen Ansprüchen definiert und werden - zusammen mit weiteren Einzelheiten und Vorteilen der Erfindung - im Rahmen der folgenden Figurenbeschreibung anhand der Figuren näher erläutert. Dabei zeigt:
- Fig. 1: in einer schematischen perspektivischen Ansicht eine Schublade,
- Fig. 2 - 4: unterschiedliche schematisch dargestellte Querschnittsansichten aus einem Bereich der Schublade, in welchem die erfindungsgemäße in einer bevorzugten Ausführungsform vorliegende Anordnung verbaut ist,
- Fig. 5: eine Explosionsdarstellung der erfindungsgemäßen in einer bevorzugten Ausführungsform vorliegenden Anordnung,
- Fig. 6 - 8: unterschiedliche Ansichten einer bevorzugten Ausführungsform einer Haltevorrichtung für eine Frontwand einer Schublade,
- Fig. 9: in einer schematischen perspektivischen Ansicht ein bevorzugtes Ausführungsbeispiel einer Haltevorrichtung für eine Rückwand einer Schublade,
- Fig. 10 - 16: eine Abfolge schematisch dargestellter Querschnittsansichten einer erfindungsgemäßen in einer bevorzugten Ausführungsform vorliegenden Anordnung zur Illustration der Montage und Demontage einer Frontwand an einer Schubladenseitenwand,
- Fig. 17 - 19: unterschiedliche schematisch dargestellte Querschnittsansichten einer weiteren bevorzugten Ausführungsform der Erfindung,
- Fig. 20 - 22: alternative Ausführungsformen der Haltevorrichtung, und
- Fig. 23: eine alternative Ausführungsform des Riegels der Verbindungsvorrichtung.

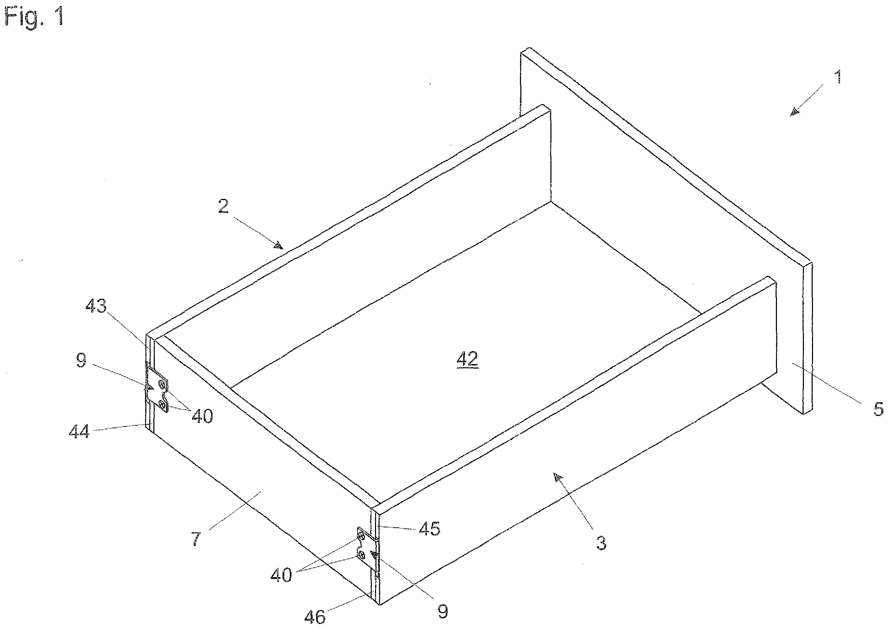

Fig. 1 zeigt in einer schematisch dargestellten perspektivischen Ansicht eine Schublade 1, mit einer Frontwand 5, zwei Seitenwänden 2 und 3, einer Rückwand 7 und einem Schubladenboden 42. Sowohl die Frontwand 5 als auch die Rückwand 7 ist jeweils rechtwinklig mittels zweier erfindungsgemäßer in unterschiedlichen Ausführungsformen vorliegenden Anordnungen mit den beiden Schubladenseitenwänden 2 und 3 lösbar verbunden, wobei diese Ausführungsformen anhand der nachfolgenden Figuren beschrieben werden. Die Verbindungsvorrichtungen zum Halten der an der Frontwand 5 bzw. der Rückwand 7 vormontierten Haltevorrichtungen sind jeweils vollständig im Inneren der Schubladenseitenwände 2 und 3 angeordnet, sodass sie nach außen hin nicht sichtbar sind und nicht den ästhetischen Eindruck der Schublade beeinträchtigen. Lediglich ein Teil der an der Rückwand 7 montierten Haltevorrichtungen 9 ist jeweils nach außen hin sichtbar, wobei im eingebauten Zustand der Schublade 1 auch dieser Teil den ästhetischen Gesamteindruck nicht beeinträchtigt, da er typischerweise von der Rückwand eines Möbelkorpus verdeckt ist. Die Schubladenseitenwände 2 und 3 sind jeweils aus zwei Platten 43 und 44 bzw. 45 und 46 zusammengefügt, wobei jeweils die äußere Platte 43 bzw. 45 aus Holz besteht und die im Holz beweglich geführten Riegel der Verbindungsvorrichtung umfasst. Es sei noch angemerkt, dass man die Verbindungstrennlinie der beiden Platten nur von hinten, nicht aber von oben betrachtet sieht, da die oberen Kanten der Schubladenseitenwände 2 und 3 jeweils mit einem Furnierblatt abgedeckt sind.

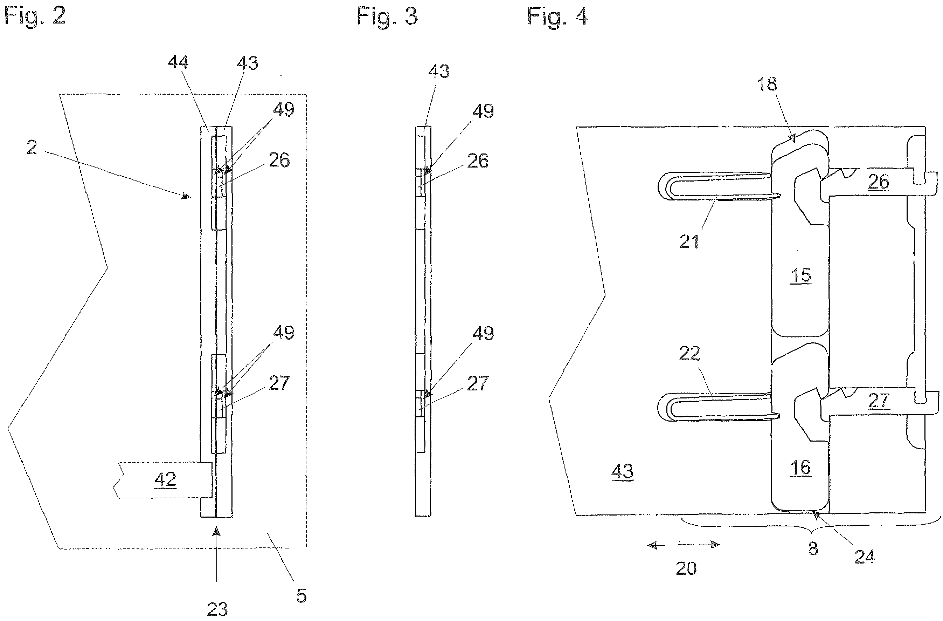

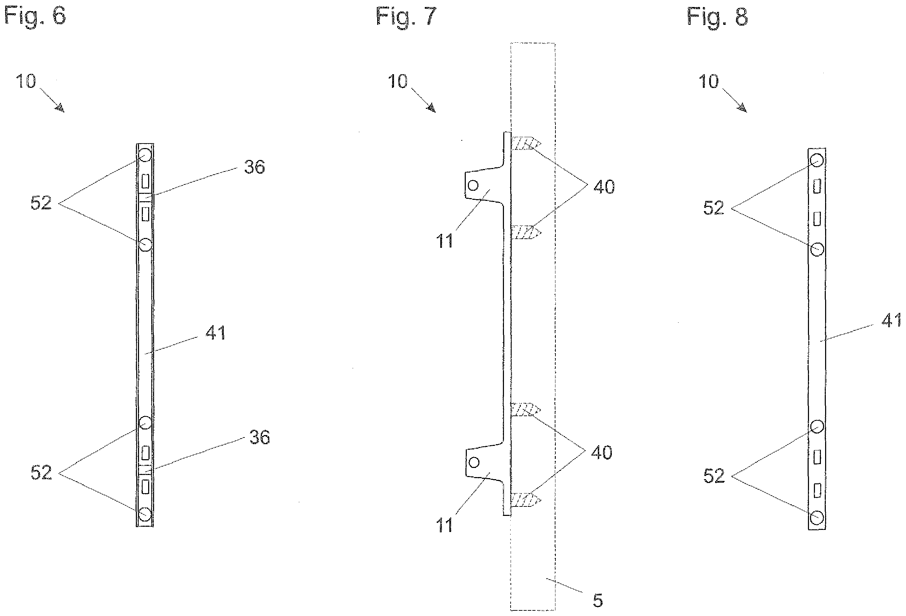

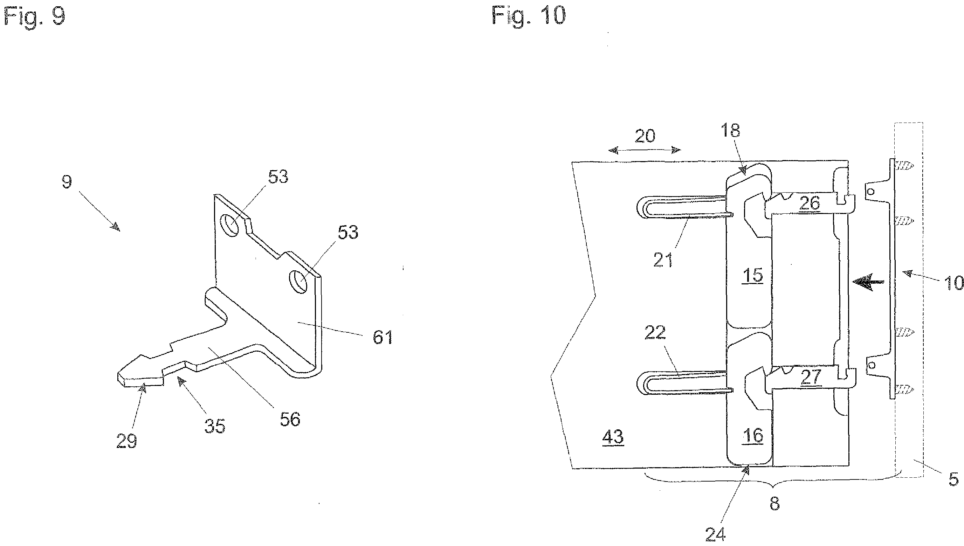

Fig. 2 zeigt diejenige Stirnseite der Schubladenseitenwand 2, die in Montagelage an der Innenseite der Frontblende 5 anliegt, wobei die Frontblende 5 und der Schubladenboden 42 schematisch mittels gestrichelter Linien angedeutet sind. Wie weiter oben ausgeführt, besteht die Schubladenseitenwand 2 aus zwei Platten 43 und 44, wobei in der nach außen gewandten Platte 43 die Verbindungsvorrichtung zur lösbaren Verbindung mit einer an der Frontwand 5 vormontierten Haltevorrichtung 10 (vgl. Fig. 6 - 8) bzw. die Verbindungsvorrichtung zur lösbaren Verbindung mit einer an der Rückwand 7 vormontierten Haltevorrichtung 9 (vgl. Fig. 1 und 9) angeordnet ist. Die Platte 43 ist in der Fig. 3 noch einmal gesondert dargestellt.

Alternativ zum dargestellten Ausführungsbeispiel können auch die inneren Platten 44 bzw. 46 aus Holz (bzw. aus einem anderen nichtmetallischen Werkstoff) bestehen und die im Holz beweglich geführten Riegel der Verbindungsvorrichtung aufweisen. Auch eine Führung der Riegel sowohl in den inneren als auch in den äußeren Platten, z.B. jeweils zur Hälfte, sei vom Erfindungsgedanken nicht ausgeschlossen. Und schließlich können die beiden Platten auch unterschiedliche Dicken aufweisen.

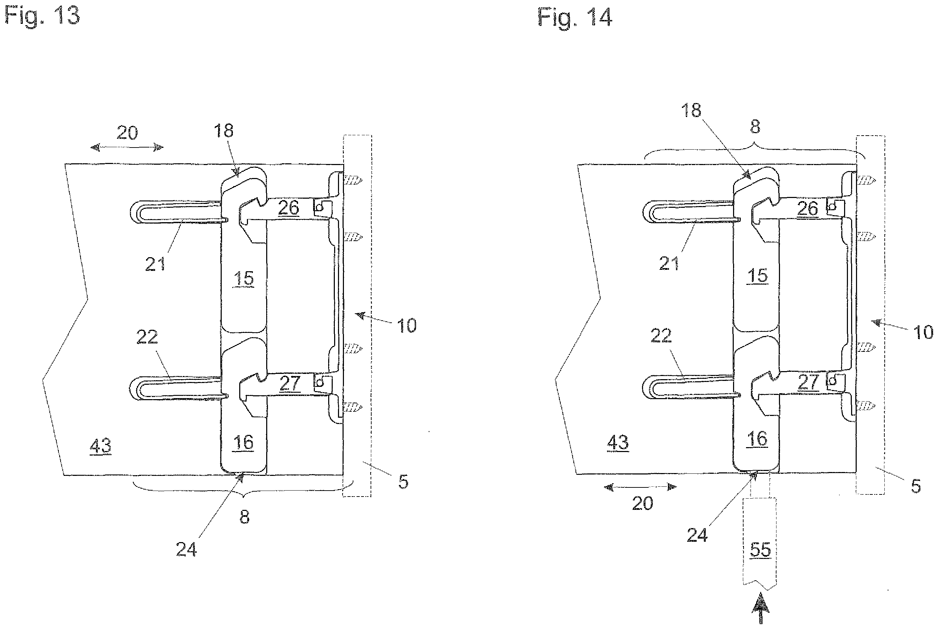

Fig. 4 zeigt in einer Seitenansicht den vorderen Bereich der Platte 43, in welchem die Anordnung 8 zum Verbinden der Frontblende 5 mit der Schubladenseitenwand 2 angeordnet ist, wobei die Anordnung 8 auch die an der Frontwand 5 vormontierte Haltevorrichtung 10 (vgl. nachfolgende Figuren) umfasst. Wie man sieht, weist die Anordnung 8 in dieser Ausführungsform zwei Riegel 15 und 16 auf, die im Gebrauchszustand der Schublade übereinander angeordnet sind. Die beiden Riegel 15 und 16 sind in einer im Holz ausgefrästen Führungsbahn 18 beweglich angeordnet, genauer gesagt linear quer, d.h. im Wesentlichen rechtwinklig, zur Längsrichtung 20 der Schubladenseitenwand 2 verschiebbar gelagert. Sie sind des Weiteren jeweils durch eine U-förmig ausgebildete Feder 21 bzw. 22 quer zur Längsrichtung 20 der Schubladenseitenwand 2 beaufschlagt. Der Riegel 16 weist an seiner Unterseite einen von der Unterseite 23 der Schubladenseitenwand 2 her zugänglichen Betätigungsbereich 24 auf, über den er - und indirekt auch der über ihm angeordnete Riegel 15 - zum Lösen der Haltevorrichtung 10 (s. Fig. 14 - 16) bewegbar ist.

Anhand der Querschnittsdarstellungen aus den Fig. 2 - 4 ist erkennbar, dass die Riegel 15 und 16 jeweils eine Deckfläche und eine Bodenfläche aufweisen, die parallel zueinander und parallel zur Außenseite der Schubladenseitenwand 2 ausgerichtet sind. Der Abstand der Deckfläche und der Bodenfläche beträgt in dieser Ausführungsform 2mm. Dieser Abstand ist gleichbedeutend mit der Dicke des Metallblechs, aus welchem die Riegel 15 und 16 gefertigt sind.

In Zusammenhang mit der Fig. 4 sei noch festgehalten, dass bei dieser Ausführungsform der erfindungsgemäßen Anordnung 8 die beiden Riegel 15 und 16 die Haltevorrichtung 10 (vgl. Fig. 6 - 8) in Montagelage indirekt über zwei Zwischenriegel 26 und 27 halten, wobei diese Zwischenriegel 26 und 27 identisch ausgebildet sind.

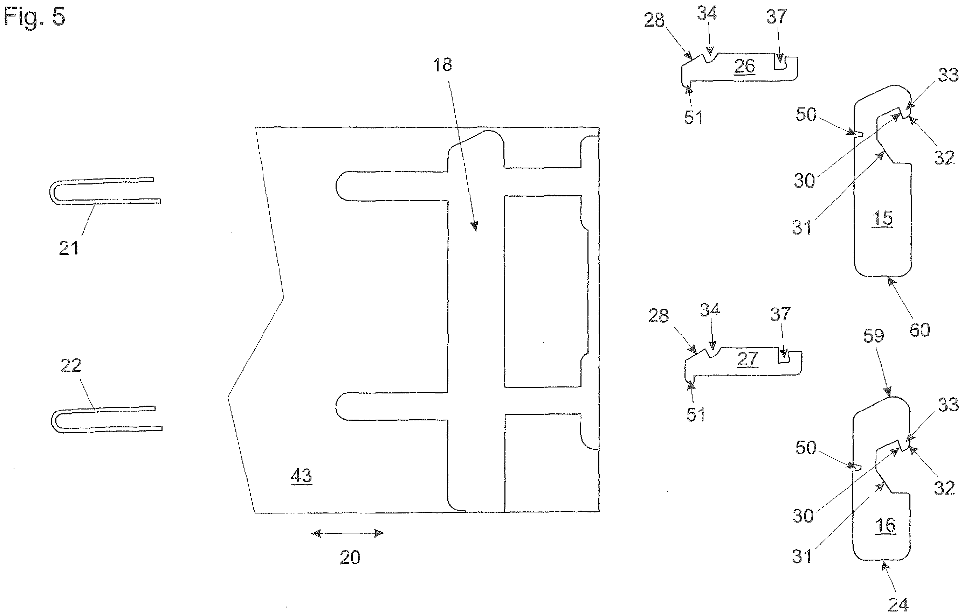

Fig. 5 zeigt eine Explosionsdarstellung der in der Fig. 4 gezeigten Anordnung. Auf die mit Bezugszeichen versehenen Details der Riegel 15 und 16 sowie der Zwischenriegel 26 und 27 wird im Zuge der Beschreibung der Fig. 10 bis 16 näher eingegangen.

Die Fig. 6 - 8 zeigen drei unterschiedliche Ansichten der an der Frontblende 5 montierten Haltevorrichtung 10, wobei die Frontblende 5 in der Fig. 7 gestrichelt angedeutet ist. Die drei Ansichten zeigen die Haltevorrichtung 10 von vorne, von der Seite und von hinten. Die Haltevorrichtung 10 besteht im Wesentlichen aus einer Grundplatte 41 und vier daran angeordneten trapezförmigen Stegen 11. Zwischen jeweils zwei dieser Stege 11 ist ein zylinderförmiger Bolzen 36 angeordnet. In der Grundplatte 41 sind mehrere Löcher 52 vorgesehen, die zur Aufnahme von Befestigungsmitteln, wie z.B. Schrauben 40 dienen, mit denen die Haltevorrichtung 10 an einer Frontblende 5 befestigt werden kann.

In der Fig. 9 ist in einer perspektivischen schematischen Ansicht eine Ausführungsform einer Haltevorrichtung 9 gezeigt, die zum Verbinden der Rückwand 7 mit den Schubladenseitenwänden 2 und 3 verwendet werden kann (vgl. Fig. 1). Die Haltevorrichtung 9 besteht im Wesentlichen aus einer Grundplatte 61, in welcher zwei Löcher 53 zur Aufnahme von Befestigungsmitteln angeordnet sind, und einem mittig daran angeordneten Steg 56, der derart ausgerichtet ist, dass er mit der Grundplatte 61 einen Winkel von ca. 90° einschließt. Das Ende dieses Steges 56 weist einen pilzförmigen Zapfen auf, dessen Funktionalität in Zusammenhang mit den nachfolgenden Figuren deutlich wird.

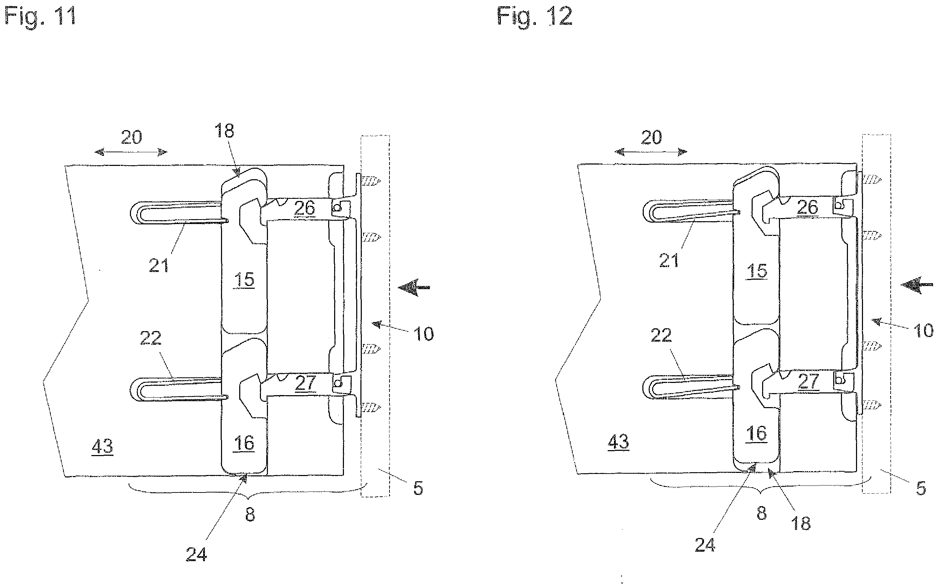

Die Abfolge der Fig. 10 - 16 dient der Illustration des Montage- bzw. Demontagevorgangs der Frontblende 5 an den Seitenwänden 2 und 3. Zur Montage wird die Frontblende 5 zunächst auf die Seitenwände zu bewegt (vgl. Fig. 10). Anschließend werden die zwei Bolzen 36 der Haltevorrichtung 10 (vgl. Fig. 6) jeweils in eine Bolzenaufnahme 37, die sich an den Zwischenriegeln 26 bzw. 27 befindet (vgl. Fig. 5), eingehängt, und die Haltevorrichtung 10 auf diese Weise mit den beiden Zwischenriegeln 26 und 27 lösbar verbunden (vgl. Fig. 11). Bolzen und Bolzenaufnahme könnten auch miteinander vertauscht sein. Dann wäre jeweils ein Bolzen an den Zwischenriegeln 26 bzw. 27 und die Bolzenannahmen an der Haltevorrichtung 10 angeordnet. Damit die trapezförmigen Stege 11 der Haltevorrichtung 10 beim Einhängen der Bolzen 36 in die Bolzenaufnahmen 37 Platz zwischen den Seitenflächen der Zwischenriegeln 26 bzw. 27 und den Platten 43 und 44 der Schubladenseitenwand haben, sind zu beiden Seiten der Zwischenriegel 26 und 27 Ausnehmungen 49 vorgesehen (vgl. Fig. 2, 3 und 17, 18).

In weiterer Folge (vgl. Fig. 12) wird die Frontblende 5 in Richtung der Schubladenseitenwände gedrückt. Dabei werden die Bolzen ein kurzes Stück in den Bolzenaufnahmen nach links bewegt und zwar solange, bis sie jeweils an der linken Kante der Aufnahmen anstoßen. Bei einer weiteren Bewegung der Frontblende 5 in Richtung der Schubladenseitenwände werden die Zwischenriegel 26 und 27 nach links mitbewegt. Dabei stoßen die Zwischenriegel 26 und 27 jeweils mit einer in Montagelage schräg ausgerichteten Kontaktfläche 28 an einen an den beiden Riegeln 15 und 16 befindlichen Rastvorsprung 33 an (vgl. Fig. 5). Genauer gesagt, stößt die Kontaktfläche 28 an eine ebenfalls schräg ausgerichtete Kontaktfläche 32, die sich an diesen Rastvorsprüngen 33 befindet. Um der Bewegung der Zwischenriegel 26 bzw. 27 auszuweichen, bewegen sich die Riegel 15 bzw. 16 (unabhängig voneinander) nach oben. Die Kontaktfläche 28 dient also dazu, eine horizontale Bewegung der Zwischenriegel 26 bzw. 27 in eine vertikale Bewegung der Riegel 15 und 16 zu übersetzen. Bei der aufwärtsgerichteten Bewegung der Riegel 15 und 16 werden die U-förmigen Federn 21 und 22, die in an den Riegeln 15 und 16 angeordnete Ausnehmungen 50 eingreifen, gespannt. Die aufwärtsgerichtete Bewegung findet solange statt, bis die Rastvorsprünge 33 die obere Kante der Kontaktflächen 28 erreicht haben. Dann können sich nämlich die beiden Riegel 15 und 16 wieder unter der Wirkung der Federn 21 und 22 nach unten bewegen und die Rastvorsprünge 33 jeweils in eine an den Zwischenriegeln 26 und 27 vorgesehene Rastmulde 34 (vgl. Fig. 5) hineingleiten. Bei dieser Verrastbewegung werden die Zwischenriegel 26 und 27 und damit die Haltevorrichtung 10 bzw. die Frontblende 5 aktiv in die endgültige Verrastposition gezogen. Hierzu weisen die Riegel 15 und 16 an den Rastvorsprüngen 33 jeweils wiederum eine schräg ausgerichtete Kontaktfläche 30 auf, welche ihrerseits einer Übersetzung einer Bewegung der Riegel 15 und 16 in eine Bewegung der Zwischenriegel 26 und 27 dienen.

Fig. 13 zeigt die Situation, in welcher die Frontblende 5 an den Schubladenseitenwänden montiert ist. In dieser Situation halten die Riegel 15 und 16 - indirekt über zwei Zwischenriegeln 26 und 27 - die Haltevorrichtung 10. Unter der Wirkung der beiden Federn 21 und 22 wird dabei die Frontblende 5 durch die Riegel 15 und 16 fest an die Stirnflächen der Seitenwände herangezogen, sodass eine Bewegung der Frontblende 5 relativ zu den Schubladenseitenwänden nicht mehr möglich ist. Wie aus der Abfolge der Fig. 10 bis 13 erkennbar ist, haben sich die Riegel 15 und 16 bei der Montage der Frontblende 5 an den Seitenwänden völlig unabhängig voneinander bewegt. Dies ist wichtig, um etwaige Montagetoleranzen, die bei der Fertigung von Holzschubkästen immer auftreten können, auszugleichen. Z.B. kann eine Höhenänderung der Schubladenseitenwand aufgrund von Feuchtigkeitsänderungen dadurch ausgeglichen werden, dass die beiden Riegel 15 und 16 in Montagelage einen etwas größeren oder einen etwas kleineren Abstand zueinander aufweisen. Es gibt also für jeden der beiden Riegel individuell eine ideale Höhenposition in Montagelage, die von Schublade zu Schublade und/oder im Verlauf der Lebensdauer einer Schublade variabel sein kann. Ein derartiger Ausgleich von Montagetoleranzen wäre nicht möglich, wenn die beiden Riegel 15 und 16 fest miteinander verbunden wären.

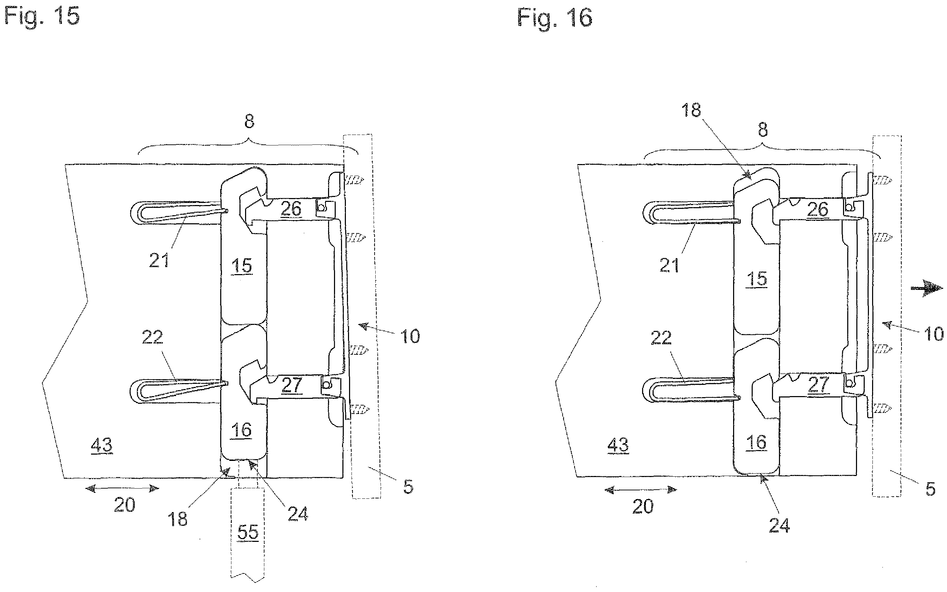

Zur Demontage, d.h. zum Lösen der Frontblende 5 von den Seitenwänden bzw. zum Lösen der Haltevorrichtung 10 weist der untere Riegel 16 an seiner Unterseite einen von der Unterseite der Schubladenseitenwand her zugänglichen Betätigungsbereich 24 auf, über welchen der Riegel 16 z.B. mittels der Spitze eines Schraubenziehers 55 oder dergleichen nach oben bewegt werden kann (vgl. Fig. 14 und 15). Dabei stößt der Riegel 16 mit einer weiteren schräg ausgerichteten Kontaktfläche 31 an einen Vorsprung 51 des Zwischenriegels 27 (vgl. Fig. 5), wodurch eine vertikale Bewegung des Riegels 16 in eine horizontale Bewegung des Zwischenriegels 27 übersetzt wird. Durch die aufwärtsgerichtete Bewegung des Riegels 16 wird der Zwischenriegel 27 nach rechts gedrückt. Ab einem bestimmten Punkt dieser Aufwärtsbewegung stößt der Riegel 16 des Weiteren mit seinem oberen Ende 59 an das untere Ende 60 des Riegels 15 (vgl. Fig. 5) und bewegt den Riegel 15 nach oben mit. Die Bewegung des Riegels 15 bewirkt in zu der Bewegung des Riegels 16 analoger Weise eine nach rechts gerichtete, horizontale Bewegung des Zwischenriegels 26. Die aufwärtsgerichtete Bewegung der Riegel 15 und 16 findet entgegen der Beaufschlagung der Riegel 15 und 16 durch die Federn 21 bzw. 22 statt. Sobald die Riegel 15 und 16 vollständig in der Holzführung 18 nach oben geschoben sind, bzw. die obere Kante der Kontaktflächen 28 der Zwischenriegel 26 und 27 durch die Rastvorsprünge 30 überwunden sind, kann der Schraubenzieher 55 wieder aus der an der Unterseite der Schubladenseitenwand befindlichen Öffnung, über welche der Betätigungsbereich 24 des Riegels 16 zugänglich ist, entfernt werden. Unter der Wirkung der Federn 21 und 22 bewegen sich dann die Riegel 15 und 16 wieder in ihre Ausgangsstellung (vgl. Fig. 10) zurück. Über die Kontaktflächen 30 bewegen sie dabei auch die Zwischenriegel 26 und 27 wieder in ihre Ausgangsstellung zurück. Das heißt, dass die Riegel 15 und 16 auch eine Auswurfwirkung bezüglich des Halteteils 10 haben. Ist die in der Fig. 16 gezeigte Stellung der Frontblende 5 in Bezug auf die Schubladenseitenwände erreicht, so kann die Frontblende 5 wieder ausgehängt werden.

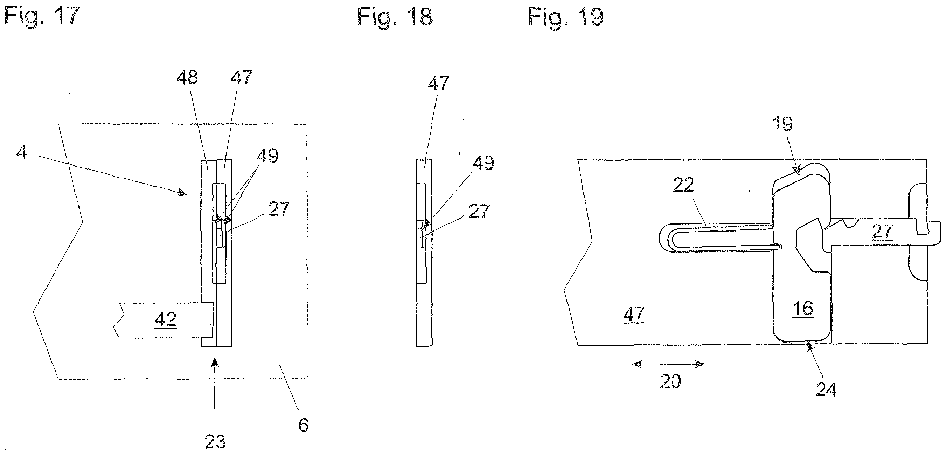

Wie eingangs ausgeführt, kann die erfindungsgemäße Anordnung auch für unterschiedliche Bauhöhen der Schublade verwendet werden. Möchte man z.B. eine Schublade verwenden, deren Frontwand 6 und Seitenwand 4 eine im Vergleich zur vorher beschriebenen Schublade niedrigere Bauhöhe aufweisen (vgl. Fig. 17 - 19), so kann man einfach den zweiten Riegel 15 weglassen. Es muss lediglich die im Holz der Schubladenseitenwand 4, die ebenfalls aus zwei Platten 47 und 48 aufgebaut ist, für den Riegel 16, die Feder 22 bzw. den Zwischenriegel 27 benötigte Führung 19 an die geänderte Situation angepasst werden. Die Verwendung nur eines Riegels ist übrigens auch bei der in der Fig. 1 gezeigten Schublade für die Halterung der Rückwand 7 der Fall. In diesem Zusammenhang sei allgemein angemerkt, dass die Funktionsweise der Anordnung zur Halterung der an einer Frontwand oder einer Rückwand angeordneten Haltevorrichtung die gleiche ist.

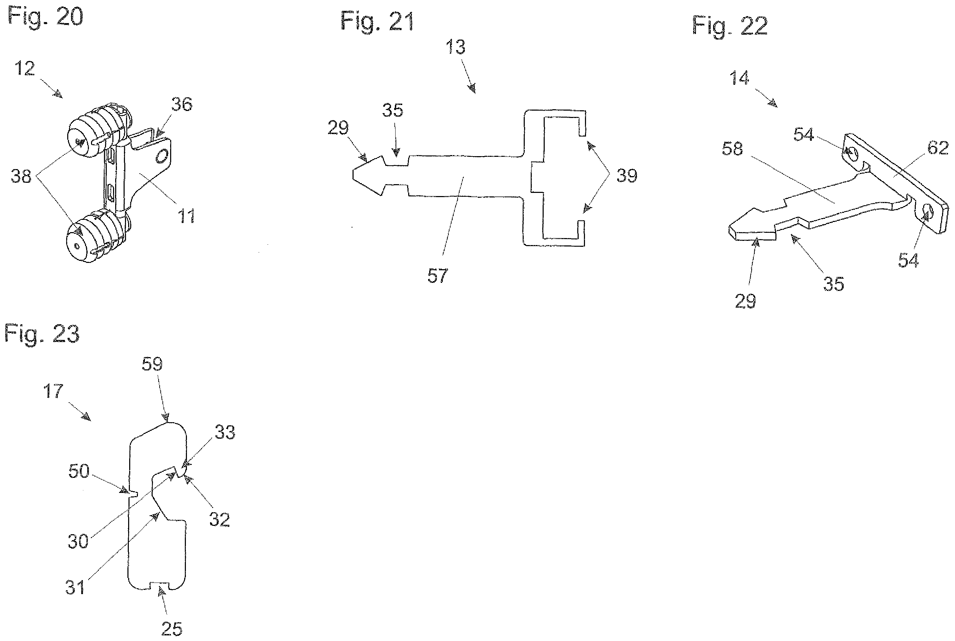

In den Fig. 20 - 22 sind drei weitere Ausführungsformen einer an einer Frontblende zu montierenden Haltevorrichtung 12, 13 bzw. 14 schematisch dargestellt. Die in der Fig. 20 gezeigte Haltevorrichtung 12 unterscheidet sich von der Haltevorrichtung 10 (vgl. Fig. 6 - 8) dadurch, dass sie nur einen Bolzen 36 aufweist und über bereits vormontierte Dübel 38 mit der Frontblende verbunden werden kann. Im Prinzip könnte man die Haltevorrichtung 10 auch durch zwei Haltevorrichtungen 12 ersetzen.

Bei der Verwendung der in den Fig. 21 und 22 gezeigten Haltevorrichtungen 13 und 14 kann auf Zwischenriegel verzichtet werden, da die Haltevorrichtungen 13 und 14 selber schon schräge Kontaktflächen 29 und Rastmulden 35 aufweisen. Sie entsprechen den Kontaktflächen 28 und Rastmulden 34 der Zwischenriegel 26 und 27 (vgl. Fig. 5). Die Kontaktflächen 29 und Rastmulden 35 sind am vorderen Ende der Stege 57 und 58 vorgesehen. Das gleiche ist übrigens auch für die an der Rückwand zu montierenden Haltevorrichtung 9 (vgl. Fig. 9) der Fall. Die Befestigung der Haltevorrichtungen 13 und 14 an einer Frontblende erfolgt über Haken 39 bzw. Befestigungsmittel, wie z.B. Schrauben oder dergleichen. Hierzu sind in der Grundplatte 62 der Haltevorrichtung 14 Löcher 54 vorgesehen.

In der Fig. 23 ist ein gegenüber dem Riegel 16 (vgl. z.B. Fig. 5) modifizierter Riegel 17 schematisch dargestellt. Er unterscheidet sich dadurch, dass er an seiner Unterseite einen Betätigungsbereich 25 in Form einer rechteckigen Ausnehmung aufweist. Sie erleichtert das Einführen der Spitze eines Schraubenziehers bei der Demontage der Frontblende.

Insbesondere bei der Verwendung von sehr dünnen Schubladenseitenwänden kann es in manchen Fällen auch vorteilhaft sein, wenn der Riegel eine Kröpfung aufweist, um den Betätigungsbereich zu verbreitern.

## Patentansprüche

1. Schublade (1) mit wenigstens einer zumindest teilweise aus einem nichtmetallischen Werkstoff, insbesondere aus Holz, gefertigten Schubladenseitenwand (2, 3, 4), wenigstens einer weiteren Schubladenwand (5, 6, 7) und wenigstens einer Anordnung (8) zum Verbinden der Schubladenseitenwand (2, 3, 4) mit der weiteren Schubladenwand (5, 6, 7), wobei die Anordnung (8) eine in der Schubladenseitenwand (2, 3, 4) angeordnete Verbindungsvorrichtung (15, 16, 17, 21, 22, 26, 27) zur lösbaren Verbindung mit einer an der weiteren Schubladenwand (5, 6, 7) vormontierten Haltevorrichtung (9, 10, 12, 13, 14) umfasst, **dadurch gekennzeichnet, dass** die Verbindungsvorrichtung (15, 16, 17, 21, 22, 26, 27) wenigstens einen, vorzugsweise ausschließlich, vom nichtmetallischen Werkstoff der Schubladenseitenwand (2, 3, 4) beweglich geführten aus einem ebenen Metallblech bestehenden Riegel (15, 16, 17) aufweist, der in Montagelage die Haltevorrichtung (9, 10, 12, 13, 14) hält, wobei der wenigstens eine Riegel (15, 16, 17) im nichtmetallischen Werkstoff der Schubladenseitenwand (2, 3, 4) linear verschiebbar gelagert ist.

2. Schublade (1) nach Anspruch 1, **dadurch gekennzeichnet, dass** der wenigstens eine Riegel (15, 16, 17) eine Deckfläche und eine Bodenfläche aufweist, wobei die Deckfläche und die Bodenfläche im Wesentlichen parallel zueinander - und vorzugsweise im Wesentlichen parallel zur Außenseite der Schubladenseitenwand (2, 3, 4) - ausgerichtet sind, und wobei der Abstand der Deckfläche und der Bodenfläche vorzugsweise zwischen 1mm und 5mm liegt.

3. Schublade (1) nach einem der Ansprüche 1 oder 2, **dadurch gekennzeichnet, dass** der wenigstens eine Riegel (15, 16, 17) im nichtmetallischen Werkstoff der Schubladenseitenwand (2, 3, 4) im Wesentlichen rechtwinklig zur Längsrichtung (20) der Schubladenseitenwand (2, 3, 4) verschiebbar gelagert ist, und/oder dass der wenigstens eine Riegel (15, 16, 17) vollständig im Inneren der Schubladenseitenwand (2, 3, 4) angeordnet ist.

4. Schublade (1) nach einem der Ansprüche 1 bis 3, **dadurch gekennzeichnet, dass** der wenigstens eine Riegel (15, 16, 17) durch wenigstens eine Feder (21, 22) - vorzugsweise im Wesentlichen rechtwinklig zur Längsrichtung (20) der Schubladenseitenwand (2, 3, 4) - beaufschlagt ist, wobei die wenigstens eine Feder (21, 22) vorzugsweise U-förmig ausgebildet ist.

5. Schublade (1) nach einem der Ansprüche 1 bis 4, **dadurch gekennzeichnet, dass** der wenigstens eine Riegel (15, 16, 17) - vorzugsweise an seiner Unterseite - wenigstens einen von der Unterseite (23) der Schubladenseitenwand (2, 3, 4) her zugänglichen Betätigungsbereich (24, 25) aufweist, über den er zum Lösen der Haltevorrichtung (9, 10, 12, 13, 14) bewegbar ist.

6. Schublade (1) nach einem der Ansprüche 1 bis 5, **dadurch gekennzeichnet, dass** der wenigstens eine Riegel (15, 16, 17) die Haltevorrichtung (9, 10, 12, 13, 14) in Montagelage direkt oder indirekt über wenigstens einen Zwischenriegel (26, 27) hält.

7. Schublade (1) nach Anspruch 6, **dadurch gekennzeichnet, dass** die Haltevorrichtung (9, 10, 12, 13, 14) bzw. der wenigstens eine Zwischenriegel (26, 27) wenigstens eine - in Montagelage vorzugsweise schräge - Kontaktfläche (28, 29) zur Übersetzung einer Bewegung der Haltevorrichtung (9, 10, 12, 13, 14) bzw. des wenigstens einen Zwischenriegels (26, 27) in eine Bewegung des wenigstens einen Riegels (15, 16, 17) aufweist.

8. Schublade (1) nach Anspruch 6 oder 7, **dadurch gekennzeichnet, dass** der wenigstens eine Riegel (15, 16, 17) eine - in Montagelage vorzugsweise schräge - Kontaktfläche (30, 31, 32) zur Übersetzung einer Bewegung des wenigstens einen Riegels (15, 16, 17) in eine Bewegung der Haltevorrichtung (9, 10, 12, 13, 14) bzw. des wenigstens einen Zwischenriegels (26, 27) aufweist.

9. Schublade (1) nach einem der Ansprüche 6 bis 8, **dadurch gekennzeichnet, dass** der wenigstens eine Riegel (15, 16, 17) die Haltevorrichtung (9, 10, 12, 13, 14) bzw. den wenigstens einen Zwischenriegel (26, 27) in Montagelage über wenigstens einen Rastvorsprung (33) und wenigstens eine Rastmulde (34, 35) hält, wobei der wenigstens eine Rastvorsprung (33) an dem wenigstens einen Riegel (15, 16, 17) und die wenigstens eine Rastmulde (34, 35) an der Haltevorrichtung (9, 10, 12, 13, 14) bzw. an dem wenigstens einen Zwischenriegel (26, 27) angeordnet ist, oder umgekehrt.

10. Schublade (1) nach einem der Ansprüche 1 bis 9, wobei der wenigstens eine Riegel (15, 16, 17) die Haltevorrichtung (9, 10, 12, 13, 14) in Montagelage indirekt über wenigstens einen Zwischenriegel (26, 27) hält, **dadurch gekennzeichnet, dass** die Haltevorrichtung (9, 10, 12, 13, 14) und der wenigstens eine Zwischenriegel (26, 27) über wenigstens einen Bolzen (36) und wenigstens eine Bolzenaufnahme (37) miteinander verbindbar sind, wobei der wenigstens eine Bolzen (36) an der Haltevorrichtung (9, 10, 12, 13, 14) und die wenigstens eine Bolzenaufnahme (37) an dem wenigstens einen Zwischenriegel (26, 27) angeordnet ist, oder umgekehrt.

11. Schublade (1) nach einem der Ansprüche 1 bis 10, **dadurch gekennzeichnet, dass** die Haltevorrichtung (9, 10, 12, 13, 14) über Dübel (38), Haken (39) und/oder Schrauben (40) an der weiteren Schubladenwand (5, 6, 7) vormontiert ist.

12. Schublade (1) nach einem der Ansprüche 1 bis 11, **dadurch gekennzeichnet, dass** die Anordnung (8) zwei vom nichtmetallischen Werkstoff der Schubladenseitenwand (2, 3, 4) bewegliche geführte Riegel (15, 16, 17) aufweist, die in Montagelage die Haltevorrichtung (9, 10, 12, 13, 14) halten, wobei die zwei Riegel (15, 16, 17) in Montagelage vorzugsweise übereinander angeordnet sind.

13. Schublade (1) nach Anspruch 12, **dadurch gekennzeichnet, dass** die zwei Riegel (15, 16, 17) unabhängig voneinander verschiebbar gelagert sind, und/oder zum Lösen der Haltevorrichtung (9, 10, 12, 13, 14) gemeinsam bewegbar sind.

14. Schublade (1) nach einem der Ansprüche 1 bis 13, **dadurch gekennzeichnet, dass** es sich bei der wenigstens einen weiteren Schubladenwand (5, 6, 7) um eine Frontwand (5, 6) oder eine Rückwand (7) handelt.

15. Schublade (1) nach einem der Ansprüche 1 bis 14, **dadurch gekennzeichnet, dass** die wenigstens eine Schubladenseitenwand (2, 3, 4) aus wenigstens zwei Platten (43, 44, 45, 46, 47, 48) zusammengefügt ist, wobei zumindest eine der wenigstens zwei Platten (43, 44, 45, 46, 47, 48) zumindest teilweise aus dem nichtmetallischen Werkstoff gefertigt ist.

## Claims

1. A drawer (1) comprising at least one drawer side wall (2, 3, 4) made at least partly from a non-metallic material, in particular wood, at least one further drawer wall (5, 6, 7) and at least one arrangement (8) for connecting the drawer side wall (2, 3, 4) to the further drawer wall (5, 6, 7), wherein the arrangement (8) includes a connecting device (15, 16, 17, 21, 22, 26, 27) arranged in the drawer side wall (2, 3, 4) for releasable connection to a holding device (9, 10, 12, 13, 14) pre-assembled to the further drawer wall (5, 6, 7), **characterised in that** the connecting device (15, 16, 17, 21, 22, 26, 27) has at least one latch (15, 16, 17) which is guided moveably, preferably exclusively, by the non-metallic material of the drawer side wall (2, 3, 4) and which comprises a flat metal sheet and which holds the holding device (9, 10, 12, 13, 14) in the assembled position, wherein the at least one latch (15, 16, 17) is mounted linearly displaceably in the non-metallic material of the drawer side wall (2, 3, 4).

2. The drawer (1) according to claim 1 **characterised in that** the at least one latch (15, 16, 17) has a top surface and a bottom surface, wherein the top surface and the bottom surface are oriented substantially parallel to each other - and preferably substantially parallel to the outside of the drawer side wall (2, 3, 4) - and wherein the spacing of the top surface and the bottom surface is preferably between 1 mm and 5 mm.

3. The drawer (1) according to claim 1 or 2 **characterised in that** the at least one latch (15, 16, 17) is mounted displaceably in the non-metallic material of the drawer side wall (2, 3, 4) substantially at a right angle to the longitudinal direction (20) of the drawer side wall (2, 3, 4) and/or the at least one latch (15, 16, 17) is arranged completely in the interior of the drawer side wall (2, 3, 4).

4. The drawer (1) according to one of claims 1 to 3 **characterised in that** the at least one latch (15, 16, 17) is acted upon by at least one spring (21, 22) - preferably substantially at a right angle to the longitudinal direction (20) of the drawer side wall (2, 3, 4) -, wherein the at least one spring (21, 22) is preferably of a U-shaped configuration.

5. The drawer (1) according to one of claims 1 to 4 **characterised in that** the at least one latch (15, 16, 17) has - preferably at its underside - at least one actuating region (24, 25) which is accessible from the underside (23) of the drawer side wall (2, 3, 4) and by way of which it is moveable for releasing the holding device (9, 10, 12, 13, 14).

6. The drawer (1) according to one of claims 1 to 5 **characterised in that** the at least one latch (15, 16, 17) holds the holding device (9, 10, 12, 13, 14) in the assembled position directly or indirectly by way of at least one intermediate latch (26, 27).

7. The drawer (1) according to claim 6 **characterised in that** the holding device (9, 10, 12, 13, 14) or the at least one intermediate latch (26, 27) has at least one contact surface (28, 29) - which is preferably inclined in the assembled position - for converting a movement of the holding device (9, 10, 12, 13, 14) or the at least one intermediate latch (26, 27) into a movement of the at least one latch (15, 16, 17).

8. The drawer (1) according to claim 6 or claim 7 **characterised in that** the at least one latch (15, 16, 17) has a contact surface (30, 31, 32) - which is preferably inclined in the assembled position - for converting a movement of the at least one latch (15, 16, 17) into a movement of the holding device (9, 10, 12, 13, 14) or the at least one intermediate latch (26, 27).

9. The drawer (1) according to one of claims 6 to 8 **characterised in that** the at least one latch (15, 16, 17) holds the holding device (9, 10, 12, 13, 14) or the at least one intermediate latch (26, 27) in the assembled position by way of at least one latching projection (33) and at least one latching recess (34, 35), wherein the at least one latching projection (33) is arranged on the at least one latch (15, 16, 17) and the at least one latching recess (34, 35) is arranged on the holding device (9, 10, 12, 13, 14) or on the at least one intermediate latch (26, 27) or vice-versa.

10. The drawer (1) according to one of claims 1 to 9 wherein the at least one latch (15, 16, 17) holds the holding device (9, 10, 12, 13, 14) in the assembled position indirectly by way of at least one intermediate latch (26, 27), **characterised in that** the holding device (9, 10, 12, 13, 14) and the at least one intermediate latch (26, 27) can be connected together by way of at least one bolt (36) and at least one bolt receiving means (37), wherein the at least one bolt (36) is arranged on the holding device (9, 10, 12, 13, 14) and the at least one bolt receiving means (37) is arranged on the at least one intermediate latch (26, 27) or vice-versa.

11. The drawer (1) according to one of claims 1 to 10 **characterised in that** the holding device (9, 10, 12, 13, 14) is pre-assembled by way of dowels (38), hooks (39) and/or screws (40) to the further drawer wall (5, 6, 7).

12. The drawer (1) according to one of claims 1 to 11 **characterised in that** the arrangement (8) has two latches ((15, 16, 17) which are guided moveably by the non-metallic material of the drawer side wall (2, 3, 4) and which hold the holding device (9, 10, 12, 13, 14) in the assembled position, wherein the two latches (15, 16, 17) are preferably arranged one above the other in the assembled position.

13. The drawer (11) according to claim 12 **characterised in that** the two latches (15, 16, 17) are mounted displaceably independently of each other and/or are moveable jointly for releasing the holding device (9, 10, 12, 13, 14).

14. The drawer (1) according to one of claims 1 to 13 **characterised in that** the at least one further drawer wall (5, 6, 7) is a front wall (5, 6) or a rear wall (7).

15. The drawer (1) according to one of claims 1 to 14 **characterised in that** the at least one drawer side wall (2, 3, 4) is assembled from at least two panels (43, 44, 45, 46, 47, 48), wherein at least one of the at least two panels (43, 44, 45, 46, 47, 48) is made at least partly from the non-metallic material.

## Revendications

1. Tiroir (1) avec au moins une paroi latérale de tiroir (2, 3, 4) fabriquée au moins partiellement en matériau non métallique, en particulier en bois, avec au moins une autre paroi de tiroir (5, 6, 7) et au moins un ensemble (8) destiné à raccorder la paroi latérale de tiroir (2, 3, 4) à l'autre paroi de tiroir (5, 6, 7), l'ensemble (8) comprenant un dispositif de raccordement (15, 16, 17, 21, 22, 26, 27) disposé dans la paroi latérale de tiroir (2, 3, 4) pour le raccordement détachable à un dispositif de retenue (9, 10, 12, 13, 14) pré-monté sur l'autre paroi de tiroir (5, 6, 7), **caractérisé en ce que** le dispositif de raccordement (15, 16, 17, 21, 22, 26, 27) comporte au moins un loquet (15, 16, 17), composé d'une tôle métallique plane, et guidé de façon mobile par le matériau, de préférence exclusivement, non métallique de la paroi latérale de tiroir (2, 3, 4) qui, dans la position de montage, retient le dispositif de retenue (9, 10, 12, 13, 14), le loquet (15, 16, 17) au moins au nombre de un étant supporté de façon à pouvoir coulisser linéairement dans le matériau non métallique de la paroi latérale de tiroir (2, 3, 4).

2. Tiroir (1) selon la revendication 1, **caractérisé en ce que** le loquet (15, 16, 17) au moins au nombre de un comporte une surface de couverture et une surface de fond, la surface de couverture et la surface de fond étant orientées essentiellement parallèlement entre elles - et de préférence essentiellement parallèlement au côté externe de la paroi latérale de tiroir (2, 3, 4) - et la distance de la surface de couverture et de la surface de fond étant de préférence comprise entre 1 mm et 5 mm.

3. Tiroir (1) selon l'une des revendications 1 ou 2, **caractérisé en ce que** le loquet (15, 16, 17) au moins au nombre de un dans le matériau non métallique de la paroi latérale de tiroir (2, 3, 4) est supporté de façon coulissante essentiellement à angle droit par rapport à la direction longitudinale (20) de la paroi latérale de tiroir (2, 3, 4), et/ou **en ce que** le loquet (15, 16, 17) au moins au nombre de un est disposé entièrement à l'intérieur de la paroi latérale de tiroir (2, 3, 4).

4. Tiroir (1) selon l'une des revendications 1 à 3, **caractérisé en ce que** le loquet (15, 16, 17) au moins au nombre de un est exposé à l'action d'au moins un ressort (21, 22) - de préférence essentiellement à angle droit par rapport à la direction longitudinale (20) de la paroi latérale de tiroir (2, 3, 4) - le ressort (21, 22) au moins au nombre de un étant de préférence constitué en forme de U.

5. Tiroir (1) selon l'une des revendications 1 à 4, **caractérisé en ce que** le loquet (15, 16, 17) au moins au nombre de un comporte - de préférence à son extrémité inférieure - au moins une zone d'actionnement (24, 25), accessible à partir du côté inférieur (23) de la paroi latérale de tiroir (2, 3, 4), par le biais de laquelle il peut être déplacé pour le détachement du dispositif de retenue (9, 10, 12, 13, 14).

6. Tiroir (1) selon l'une des revendications 1 à 5, **caractérisé en ce que** le loquet (15, 16, 17) au moins au nombre de un retient le dispositif de retenue (9, 10, 12, 13, 14) dans la position de montage directement ou indirectement par le biais d'au moins un loquet intermédiaire (26, 27).

7. Tiroir (1) selon la revendication 6, **caractérisé en ce que** le dispositif de retenue (9, 10, 12, 13, 14) ou respectivement le loquet intermédiaire (26, 27) au moins au nombre de un comporte au moins une surface de contact (28, 29) - de préférence oblique dans la position de montage - destinée à convertir un mouvement du dispositif de retenue (9, 10, 12, 13, 14) ou respectivement du loquet intermédiaire (26, 27) au moins au nombre de un en un mouvement du loquet (15, 16, 17) au moins au nombre de un.

8. Tiroir (1) selon la revendication 6 ou 7, **caractérisé en ce que** le loquet (15, 16, 17) au moins au nombre de un comporte une surface de contact (30, 31, 32) - de préférence oblique dans la position de montage - destinée à convertir un mouvement du loquet (15, 16, 17) au moins au nombre de un en un mouvement du dispositif de retenue (9, 10, 12, 13, 14) ou respectivement du loquet intermédiaire (26, 27) au moins au nombre de un.

9. Tiroir (1) selon l'une des revendications 6 à 8, **caractérisé en ce que** le loquet (15, 16, 17) au moins au nombre de un retient le dispositif de retenue (9, 10, 12, 13, 14) ou respectivement le loquet intermédiaire (26, 27) au moins au nombre de un dans la position de montage par le biais d'au moins une saillie d'encliquetage (33) et d'au moins une cuvette d'encliquetage (34, 35), la saillie d'encliquetage (33) au moins au nombre de un étant disposée sur le loquet (15, 16, 17) au moins au nombre de un, et la cuvette d'encliquetage (34, 35) au moins au nombre de un étant disposée sur le dispositif de retenue (9, 10, 12, 13, 14) ou respectivement sur le loquet intermédiaire (26, 27) au moins au nombre de un, ou inversement.

10. Tiroir (1) selon l'une des revendications 1 à 9, le loquet (15, 16, 17) au moins au nombre de un retenant le dispositif de retenue (9, 10, 12, 13, 14) dans la position de montage indirectement par le biais d'au moins loquet intermédiaire (26, 27), **caractérisé en ce que** le dispositif de retenue (9, 10, 12, 13, 14) et le loquet intermédiaire (26, 27) au moins au nombre de un peuvent être raccordés l'un à l'autre par le biais d'au moins un goujon (36) et d'au moins un logement de goujon (37), le goujon (36) au moins au nombre de un étant disposé sur le dispositif de retenue (9, 10, 12, 13, 14), et le logement de goujon (37) au moins au nombre de un étant disposé sur le loquet intermédiaire (26, 27) au moins au nombre de un, ou inversement.

11. Tiroir (1) selon l'une des revendications 1 à 10, **caractérisé en ce que** le dispositif de retenue (9, 10, 12, 13, 14) est pré-monté sur l'autre paroi de tiroir (5, 6, 7) par le biais de chevilles (38), crochets (39) et/ou vis (40).

12. Tiroir (1) selon l'une des revendications 1 à 11, **caractérisé en ce que** l'ensemble (8) comporte de deux loquets (15, 16, 17) mobiles, guidés par le matériau non métallique de la paroi latérale de tiroir (2, 3, 4), qui retiennent le dispositif de retenue (9, 10, 12, 13, 14) dans la position de montage, les deux loquets (15, 16, 17) étant, dans la position de montage, disposés de préférence l'un au-dessus de l'autre.

13. Tiroir (1) selon la revendication 12, **caractérisé en ce que** les deux loquets (15, 16, 17) sont supportés de façon coulissante indépendamment l'un de l'autre, et/ou peuvent être déplacés conjointement pour le détachement du dispositif de retenue (9, 10, 12, 13, 14).

14. Tiroir (1) selon l'une des revendications 1 à 13, **caractérisé en ce que**, concernant l'autre paroi de tiroir (5, 6, 7) au moins au nombre de un, il s'agit d'une paroi frontale (5, 6) ou d'une paroi arrière (7).

15. Tiroir (1) selon l'une des revendications 1 à 14, **caractérisé en ce que** la paroi latérale de tiroir (2, 3, 4) au moins au nombre de un est assemblée à partir d'au moins deux plaques (43, 44, 45, 46, 47, 48), au moins une des plaques (43, 44, 45, 46, 47, 48) au moins au nombre de deux étant fabriquée au moins partiellement dans le matériau non métallique.
